# EUROPÄISCHE PATENTANMELDUNG

(11) **EP 0 976 959 A2**
(43) Veröffentlichungstag der Anmeldung: **02.02.2000**
(21) Anmeldenummer: 99113972.6
(22) Anmeldetag: 17.07.1999
(51) Int. Cl.: F16L 5/08

(54) **Abgedichtete Durchführung von Leitungen durch eine wand- oder plattenartige Struktur, insbesondere eines Schienenfahrzeuges**

(30) Priorität: 31.07.1998 DE 29813558 U
(71) Anmelder: Siemens Duewag Schienenfahrzeuge GmbH, 47829 Krefeld (DE)
(72) Erfinder: Richter, Olaf, Dipl.-Ing., 34323 Beiseförth (DE); Sander, Hans, Dr.-Ing., 47906 Kempen (DE)

(57) **Zusammenfassung**

Bei einer abgedichteten Durchführung von Leitungen (1) durch eine wand- oder plattenartige Struktur (2), insbesondere eines Schienenfahrzeuges, weist die Struktur (2) eine Durchbruchöffnung (3) auf, innerhalb der ein Halte-und Dichtungselement angeordnet ist. Dieses Element besteht aus einem zentralen Elastomerkörper (4) und zwei Deckeln (5, 5'). Der Elastomerkörper (4) ist mit Bohrungen (4a) für jeweils eine der Leitungen (1) versehen und durch Anpressen der beiden Deckel (5, 5') derart verformbar, daß ein festes und rundum dichtes Zusammenwirken mit der Durchbruchöffnung (3) und mit den Leitungen (1) vorliegt.

## Beschreibung

Die Erfindung betrifft eine abgedichtete Durchführung von Leitungen durch eine wand- oder plattenartige Struktur, insbesondere eines Schienenfahrzeuges, wobei die Struktur eine Durchbruchöffnung aufweist.

Bei der Ausführung von Konstruktionen z. B. Metall ist es häufig erforderlich, Leitungen durch die Wände dieser Strukturen von innen nach außen (oder umgekehrt) zu führen und gegenüber der jeweiligen Struktur abzudichten. Der Ausdruck "Leitung" umfaßt insbesondere Elektrokabel und Rohre, die eine beliebige Querschnittsform haben können - beispielsweise rund, oval, quadratisch oder rechteckförmig. Es versteht sich, daß für die Durchführung der Leitungen eine Durchbruchöffnung in der Struktur notwendig ist. Falls es sich bei dieser Struktur um eine aus Aluminium-Strangpreßprofilen gebildete Bodenplatte eines Schienenfahrzeug-Wagenkastens handelt, wird für das Einbringen der Durchbruchöffnung in das Strangpreßprofil ein Ausschnitt gefräst und dieser mit einem Kragen ausgekleidet. Der Kragen besteht in der Regel aus wenigstens einem Blech in der Materialstärke des durchbrochenen Strangpreßprofils. Der Kragen besitzt an beiden Seiten der Durchbruchöffnung einen gewissen Überstand, der sowohl an der Oberseite als auch an der Unterseite des Strangpreßprofils das Anbringen einer dichtgeschweißten Kehlnaht zuläßt. Dadurch ist ein dichter Abschluß der Hohlräume des Strangpreßprofils im Bereich der Durchbruchöffnung gegeben.

Der Erfindung liegt die Aufgabe zugrunde, eine abgedichtete Leitungsdurchführung zu schaffen, die hinsichtlich ihres Aufbaues und ihrer Montage möglichst einfach gestaltet sein soll.

Diese Aufgabe wird erfindungsgemäß dadurch gelöst, daß innerhalb der Durchbruchöffnung ein Halte- und Dichtungselement angeordnet ist, das aus einem zentralen Elastomerkörper und zwei Deckeln besteht, wobei der Elastomerkörper mit Bohrungen für jeweils eine der Leitungen versehen und durch Anpressen der beiden Deckel derart verformbar ist, daß ein festes und rundum dichtes Zusammenwirken mit der Durchbruchöffnung und mit den Leitungen vorliegt.

Nach einer bevorzugten Ausgestaltung der Erfindung sind an einem der beiden Deckel Schraubenbolzen befestigt, die den Elastomerkörper sowie den anderen Deckel durchdringen und aus diesem Deckel für das Aufschrauben einer jeweiligen Mutter hervorstehen.

Die mit dem Gegenstand nach der Erfindung erzielbaren Vorteile liegen vor allem darin, daß das Halte- und Dichtungselement sehr kompakt ausgebildet werden kann und dadurch nur wenig Einbauraum benötigt. Die Durchbruchöffnung kann also relativ klein sein, so daß die Struktur weitaus weniger geschwächt wird, wobei die Durchbruchöffnung auch in statisch kritischen Zonen zu verwirklichen ist. Es wird ein einwandfrei fester und dichter Sitz des Elementes und der Leitungen in der Durchbruchöffnung erzielt, und zwar ohne eine zusätzliche Halterung bzw. Sicherung sowie eine gesonderte Dichtung.

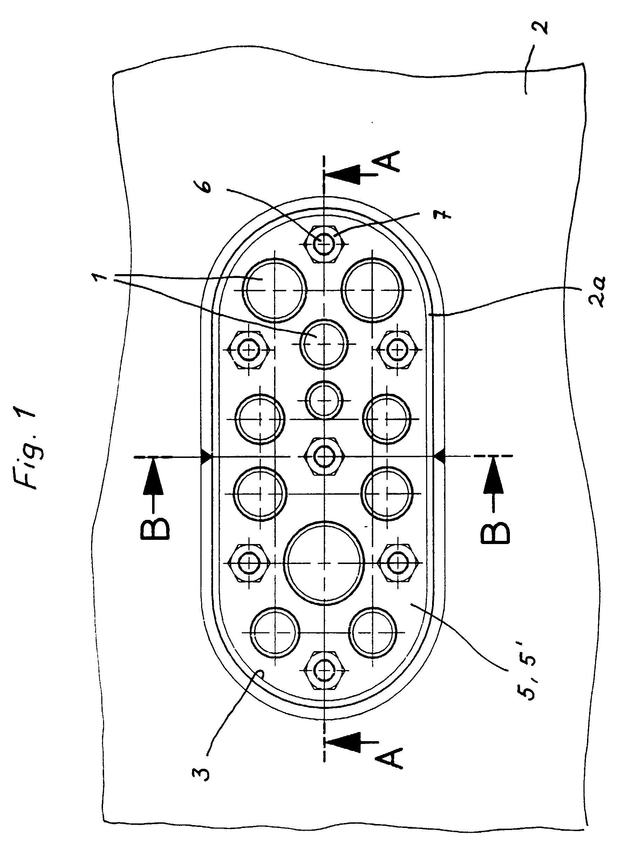

Im weiteren wird die Erfindung anhand eines Ausführungsbeispiels näher beschrieben, das in der Zeichnung schematisch dargestellt ist. Es zeigen
- Fig. 1: eine Ansicht auf einen Teilbereich einer der Wagenkastenstruktur eines Schienenfahrzeuges zugehörigen Bodenplatte mit einer Durchbruchöffnung und einem Halte- und Dichtungselement nach der Erfindung,

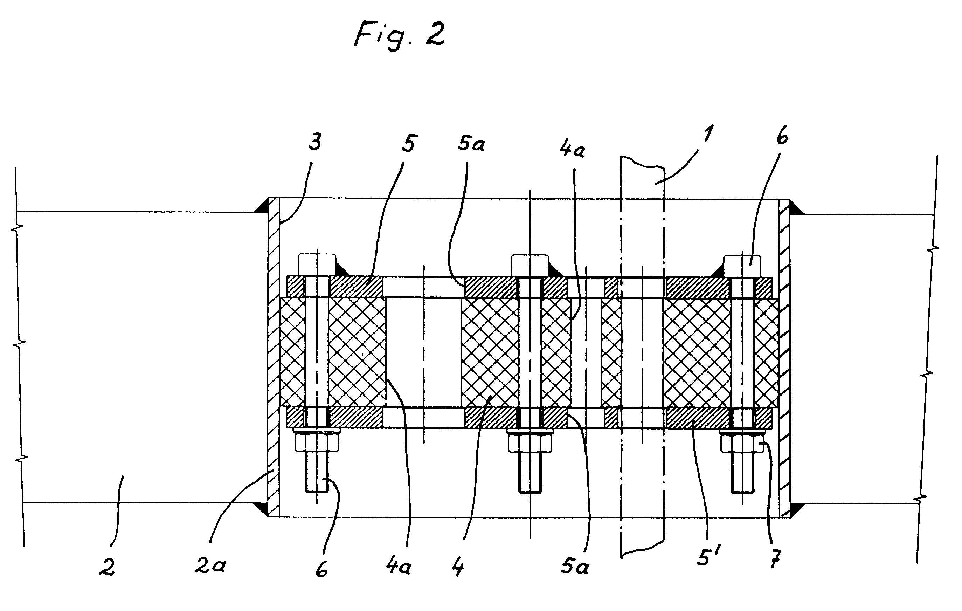

- Fig. 2: den Schnitt nach der Linie A - A in Fig. 1,

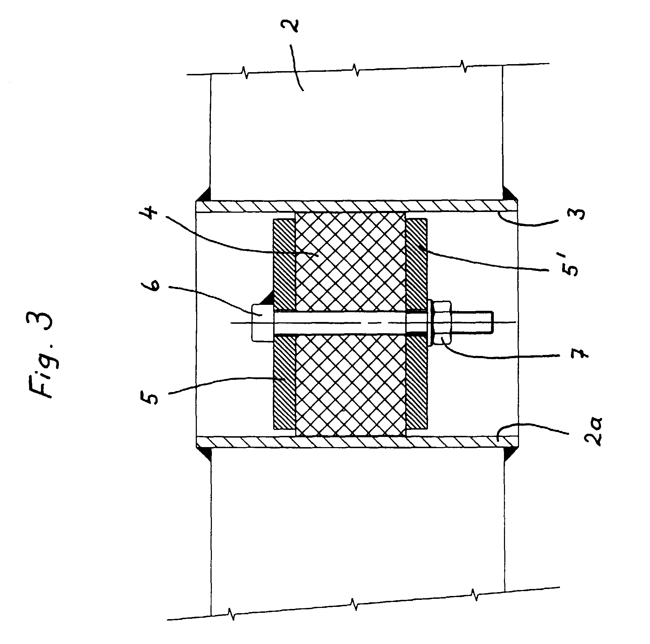

- Fig. 3: den Schnitt nach der Linie B - B in Fig. 1.

Wie weiter oben bereits beschrieben, enthält die aus Aluminium-Strangpreßprofilen gebildete Bodenplatte 2 eine Durchtrittöffnung 3 für Leitungen 1. Diese Öffnung 3 ist durch einen Kragen 2a ausgekleidet, der über Kehlnähte dicht mit dem Strangpreßprofil der Bodenplatte 2 verbunden ist.

Innerhalb der Durchbruchöffnung 3 befindet sich ein Halte- und Dichtungselement, das aus einem zentralen Elastomerkörper 4 (Polymer) und zwei Deckeln 5, 5' aus vorzugsweise Edelstahlblech besteht. Der Elastomerkörper 4 ist mit Bohrungen 4a für jeweils eine der Leitungen 1 versehen. Auch die beiden Deckel 5, 5' haben Bohrungen 5a für die durchzuführenden Leitungen 1. An dem im Ausführungsbeispiel oberen Deckel 5 sind Schraubenbolzen 6 befestigt, die den Elastomerkörper 4 sowie den hier unteren Deckel 5' durchdringen und aus diesem Deckel 5' für das Aufschrauben einer jeweiligen Mutter 7 hervorstehen. Durch Hutmuttern ist ein besonders gefälliges Aussehen erreichbar. Das Halte- und Dichtungselement hat eine hohe UV-Beständigkeit und ist ohne weiteres lakkierbar.

Um das mit Hilfe der Schraubenbolzen 6 und der Muttern 7 vereinigte Halte- und Dichtungselement für die Endmontage vorzubereiten, werden die Leitungen 1 durch die dafür vorgesehenen Bohrungen 4a und 5a gezogen. Für einen leichten Einbau empfiehlt es sich, den Kragen 2a, die Leitungen 1 im Bereich des Elementes und die Schraubenbolzen 6 mit einem Gleitmittel zu benetzen und die Verschraubung 6, 7 leicht anzuziehen.

Alsdann wird das Halte- und Dichtungselement in der Durchbruchöffnung 3 positioniert, wobei auf eine spannungsfreie Lage der Leitungen 1 zu achten ist. Nach dem Ausrichten wird die Verschraubung 6, 7 mit dem entsprechenden Drehmoment angezogen und dadurch über die beiden Deckel 5, 5' eine hohe Druckkraft auf den Elastomerkörper 4 ausgeübt. Der sich dabei verformende Elastomerkörper 5 (weitgehend volumenstabil, aber nicht formstabil) paßt sich sowohl außen der Kontur des Kragens 2a der Bodenplatte 2 als auch innen der Kontur der Leitungen 1 und der Schraubenbolzen 6 an. Durch den hohen Druck und über die entsprechend hohe Flächenpressung werden ein einwandfrei fester und dichter Sitz des Elementes und der Leitungen in der Durchbruchöffnung 3 erzielt; eine zusätzliche Halterung bzw. Sicherung sowie eine gesonderte Dichtung werden vorteilhaft nicht benötigt. Durch das Lösen der Verschraubung 6, 7 ist eine Demontage und somit ein Austauschen einzelner Leitungen 1 möglich.

Der Elastomerkörper 4 kann aus einem Plattenmaterial ausgeschnitten werden. Alternativ kann der Elastomerkörper 4 innerhalb der Durchbruchöffnung 3 - also sozusagen vor Ort - aus Zweikomponenten-Elastomeren hergestellt werden. In diesem Falle werden die Leitungen 1 zunächst durch die Bohrungen 5a der beiden Deckel 5, 5' gezogen. Anschließend werden der untere Deckel 5' und die Leitungen 1 in der Durchbruchöffnung 3 fixiert, beispielsweise durch ein festklemmbares, später entfernbares Hilfsmittel. Eventuell vorhandene Spalte zwischen dem unteren Deckel 5' und der Durchbruchöffnung 3 bzw. zwischen den Leitungen 1 und dem Deckel 5' werden durch eine aufspritzbare Dichtmasse verschlossen. Nach dem Benetzen der vormontierten Komponenten mit einem Trennmittel, z. B. einem harz- und säurefreien Öl, wird zum Bilden des Elastomerkörpers 4 eine Zweikomponentenpaste eingebracht, die möglichst gleichmäßig aufzufüllen ist. Nach dem Aushärten des so geschaffenen Elastomerkörpers 4 und dem Aufsetzen des oberen Deckels 5 wird die oben erläuterte Montage ausgeführt.

### Liste der Bezugszeichen

- 1: Leitung (Kabel, Rohr)
- 2: plattenartige Struktur, z. B. Bodenplatte
- 2a: Kragen
- 3: Durchbruchöffnung
- 4: Elastomerkörper
- 4a: Bohrung
- 5: erster Deckel
- 5': zweiter Deckel
- 5a: Bohrung
- 6: Schraubenbolzen
- 7: Mutter

## Patentansprüche

1. Abgedichtete Durchführung von Leitungen (1) durch eine wand- oder plattenartige Struktur (2), insbesondere eines Schienenfahrzeuges, wobei die Struktur (2) eine Durchbruchöffnung (3) aufweist, dadurch gekennzeichnet, daß innerhalb der Durchbruchöffnung (3) ein Halte- und Dichtungselement angeordnet ist, das aus einem zentralen Elastomerkörper (4) und zwei Deckeln (5, 5') besteht, wobei der Elastomerkörper (4) mit Bohrungen (4a) für jeweils eine der Leitungen (1) versehen und durch Anpressen der beiden Deckel (5, 5') derart verformbar ist, daß ein festes und rundum dichtes Zusammenwirken mit der Durchbruchöffnung (3) und mit den Leitungen (1) vorliegt.

2. Abgedichtete Durchführung nach Anspruch 1, dadurch gekennzeichnet, daß an einem der beiden Deckel (5) Schraubenbolzen (6) befestigt sind, die den Elastomerkörper (4) sowie den anderen Deckel (5') durchdringen und aus diesem Deckel (5') für das Aufschrauben einer jeweiligen Mutter (7) hervorstehen.
